Europäisches Patentamt

European Patent Office

Office européen des brevets

(19)

(11) **EP 1 097 529 B1**

(12) **EUROPÄISCHE PATENTSCHRIFT**

(45) Veröffentlichungstag und Bekanntmachung des Hinweises auf die Patenterteilung:
**21.05.2003 Patentblatt 2003/21**

(21) Anmeldenummer: **99945919.1**

(22) Anmeldetag: **05.07.1999**

(51) Int Cl.⁷: $H04B\ 7/26$, $H04Q\ 7/32$

(86) Internationale Anmeldenummer:
**PCT/DE99/02081**

(87) Internationale Veröffentlichungsnummer:
**WO 00/004661 (27.01.2000 Gazette 2000/04)**

(54) **VERFAHREN ZUR INFORMATIONSÜBERTRAGUNG UND FUNKSTATION**

METHOD FOR TRANSMITTING INFORMATION AND RADIO STATION

PROCEDE DE TRANSMISSION D'INFORMATIONS ET STATION RADIO

(84) Benannte Vertragsstaaten:
**DE ES FR GB IT**

(30) Priorität: **14.07.1998 DE 19831569**

(43) Veröffentlichungstag der Anmeldung:
**09.05.2001 Patentblatt 2001/19**

(73) Patentinhaber: **SIEMENS AKTIENGESELLSCHAFT 80333 München (DE)**

(72) Erfinder: **RAAF, Bernhard D-81475 München (DE)**

(56) Entgegenhaltungen:
**WO-A-97/22223**

- **EUROPEAN TELECOMMUNICATIONS STANDARDS INSTITUTE: "DIGITAL CELLULAR TELECOMMUNICATIONS SYSTEM (PHASE 2); RADIO TRANSMISSION AND RECEPTION (GSM 05.05 VERSION 4.20.1)" EUROPEAN TELECOMMUNICATION STANDARD, ETS 300 577, MARCH 1998, 12 EDITION, - 1. März 1998 (1998-03-01) Seiten 1-43, XP002128743 SOPHIA ANTIPOLIS, FRANCE**
- **MITCHELL B: "VARIABLE BANDWIDTH RSSI SCANNING" MOTOROLA TECHNICAL DEVELOPMENTS,US,MOTOROLA INC. SCHAUMBURG, ILLINOIS, Bd. 28, 1. August 1996 (1996-08-01), Seiten 22-24, XP000638408**

EP 1 097 529 B1

**Beschreibung**

Die Erfindung bezieht sich auf ein Verfahren und eine Funkstation zur Informationsübertragung, insbesondere mittels eines Mobilfunksystems, die dabei verwendete Frequenzkanalanordnung, und eine entsprechend angepaßte Frequenzkanalsuche.

Bei herkömmlichen Mobilfunksystemen, wie dem GSM (Global System for Mobile Communication)-System wird zur effizienten Nutzung der Übertragungskapazitäten ein Vielfachzugriffsverfahren angewendet. Dabei werden auch gemäß einem Frequenzvielfachzugriff FDMA die zur Verfügung stehenden Frequenzbänder in mehrere Frequenzkanäle aufgeteilt. Für den GSM-Betrieb sind zwei Frequenzbänder mit 45MHz Bandabstand reserviert: für den Uplink von der Mobilstation zur Basisstation der Bereich 890MHz bis 915MHz und für den Downlink-Betrieb von der Basisstation zur Mobilstation der Bereich 935MHz bis 960MHz. Die Frequenzbänder haben eine Breite von 25MHz und werden in 124 einzelne Frequenzkanäle mit jeweils 200 KHz unterteilt. Häufig wird ein Frequenzband dabei noch aufgeteilt und die entstehenden Teilfrequenzbänder und die entsprechenden Frequenzkanäle unterschiedlichen Netzbetreibern zugeteilt.

Die Veröffentlichung 'Digital cellular telecommunications system (Phase 2); Radio transmission and reception (GSM 05.05 version 4.20.1)' EUROPEAN TELECOMMUNICATION STANDARD, ETS 300 577, 12. Auflage, European Telecommunications Standards Institute, Sophia Antipolis, März 1998, offenbart darüber hinaus eine Anordnung von Trägermitteifrequenzen gemäß einem feinen Rasterschema in zwei, gemäß einer groben Rasterung angeordneten Frequenzbereichen (GSM 900 und DCS 1800).

Auch in zukünftigen Mobilfunksystemen, wie beispielsweise dem sich in der Standardisierung befindlichen Wide-Band-CDMA-System kommt eventuell in Verbindung mit einem anderen Zugriffsverfahren, wie beispielsweise einem Zeitvielfachzugriffsverfahren TDMA, ein Frequenzvielfachzugriffsverfahren FDMA zusammen mit einem Code-Vielfachzugriffsverfahren CDMA zum Einsatz.

Der Erfindung liegt nun die Aufgabe zugrunde, zur Kommunikation über ein Mobilfunksystem vorhandene Frequenzbereiche so anzuordnen, zu gliedern und den einzelnen Netzbetreibern bzw.

Teilnehmern zuzuordnen, daß sie zur Informationsübertragung effizient genutzt werden können.

Diese Aufgabe wird durch die Merkmale der unabhängigen Patentansprüche gelöst. Weiterbildungen ergeben sich aus den Unteransprüchen.

Die Erfindung beruht also auf dem Gedanken, zur Verfügung stehende Frequenzbereiche in Frequenzbänder oder zumindest ein Frequenzband und Frequenzkanäle aufzuteilen, und diese Frequenzkanäle gemäß einem ersten groben Rasterschema und einem zweiten feinen Rasterschema anzuordnen, wobei zumindest der Definitionsbereich des feinen Rasterschemas eingeschränkt ist.

Dabei kann das grobe Rasterschema beispielsweise auch durch einen Trägerabstand (carrier spacing) und das feine Rasterschema als Subraster beschrieben werden.

Dadurch wird erreicht, daß ein bestimmter Frequenzkanal mit weniger Informationen beschrieben werden kann, und bei der Verwendung dieser Informationen zur Durchführung einer entsprechend eingeschränkten Frequenzkanalsuche eine Netzsuche bzw. Synchronisation mit weniger Aufwand durchgeführt werden kann.

Eine andere Weiterbildung der Erfindung sieht vor, daß das grobe und das feine Rasterschema durch jeweils eine variable und eine konstante Information beschrieben wird. Durch die Abspeicherung der ersten konstanten Informationen in einer Funkstation und die Übertragung der zweiten variablen Informationen zwischen den Funkstationen können Informationen zur eindeutigen Beschreibung eines Frequenzkanals mit weniger Aufwand zwischen den Funkstationen ausgetauscht werden.

Bei einer weiteren Ausgestaltung der Erfindung werden die Informationen gemäß einem CDMA-Verfahren durchgeführt, wobei die mittels eines CDMA-Codes gespreizten Funksignale im wesentlichen innerhalb eines Frequenzkanals übertragen werden, und die Anordnung der Frequenzkanäle gemäß dem Rasterschema so an die Übertragungsverhältnisse angepaßt werden, daß Interferenzen zwischen den Funksignalen der Frequenzkanäle möglichst stark reduziert werden.

Die Erfindung umfaßt auch Verfahren zur Informationsübertragung zwischen einer ersten Basisstation BS und einer ersten Mobilstation MS und einer zweiten Basisstation BS und einer zweiten Mobilstation MS, bei dem zur Übertragung der Informationen mehrere Frequenzkanäle f zur Verfügung stehen, und die Übertragung von Informationen zwischen der ersten Basisstation BS und der ersten Mobilstation MS zumindest zeitweise mitteis Funksignale im wesentlichen innerhalb eines ersten Frequenzkanals f1, und die Übertragung von Informationen zwischen der zweiten Basisstation BS und der zweiten Mobilstation MS zumindest zeitweise mittels Funksignale im wesentlichen innerhalb eines zweiten Frequenzkanals f2 erfolgt, wobei die erste und zweite Basisstation auch unterschiedlichen Netzbetreibern oder unterschiedlichen Layern eines hierarchischen Zellsystems zugeordnet sein können.

Unter Übertragung versteht man im Rahmen der Anmeldung auch das Senden und/oder Empfangen von Nachrichten.

Die Erfindung wird im folgenden anhand bevorzugter Ausführungsbeispiele näher beschrieben, zu deren Erläuterung die nachstehend aufgelisteten Figuren dienen:

Figur 1 Blockschaltbild eines Mobilfunksystems;

Figur 2 schematische Darstellung von Vielfachzugriffsverfahren;

Figur 3 schematische Darstellung eines Rasterschemas zur Frequenzkanalanordnung;

Figur 4 Blockschaltbild einer Funkstation.

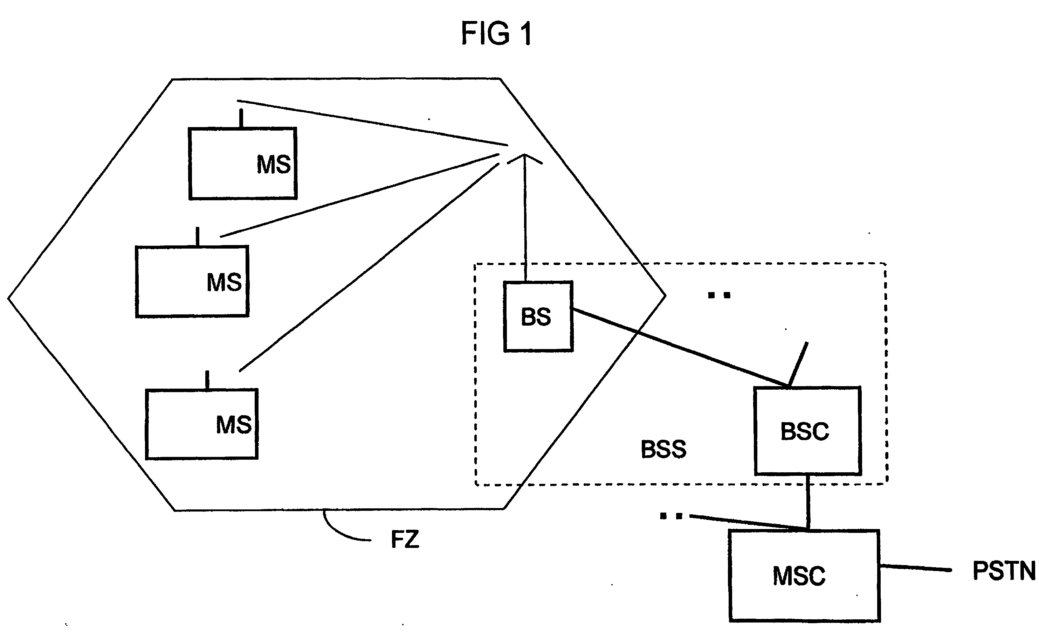

In Figur 1 ist ein zellulares Mobilfunksystem dargestellt, das aus einer Vielzahl von Mobilvermittlungsstellen MSC besteht, die untereinander vernetzt sind, bzw. den Zugang zu einem Festnezt PSTN herstellen. Ferner sind diese Mobilvermittlungsstellen MSC mit jeweils zumindest einem Basisstationscontroler BSC verbunden, der auch durch ein Datenverarbeitungssystem gebildet sein kann. Jeder Basisstationscontroler BSC ist wiederum mit zumindest einer Basisstation BS verbunden. Eine solche Basisstation BS ist eine Funkstation, die über eine Funkschnittstelle eine Funkverbindung zu anderen Funkstationen, sogenannten Mobilstationen MS aufbauen kann. Zwischen den Mobilstationen MS und der diesen Mobilstationen MS zugeordneten Basisstation BS können mittels Funksignalen Informationen innerhalb von Funkkanälen f die innerhalb von Frequenzbändern b liegen, übertragen werden. Die Übertragung der Funksignale kann dabei gemäß an sich bekannter, insbesondere digitaler, Verfahren zur Datrenübertragung innerhalb vorgegebener Frequenzkanäle, die auch durch entsprechende Trägerfrequenz beschreibbar sind, erfolgen. Die Signalleistung der auf diesen Trägerfrequenzen übertragenen Signale liegt dabei im wesentlichen, aber in der Regel nicht ausschließlich, innerhalb eines vorgegebenen Bereichs um die Trägerfrequenz. Dieser Bereich kann auch zur Beschreibung eines Frequenzkanals herangezogen werden.

Die Reichweite der Funksignale einer Basisstation definieren im wesentlichen eine Funkzelle FZ. Die Zuteilung von Ressourcen, wie Frequenzkanäle oder Spreizcodessets zu Funkzellen FZ und damit zu den zu übertragenden Informationen kann durch Steuereinrichtungen, wie beispielsweise die Basisstationscontroler BSC gesteuert werden. Basisstationen BS und ein Basisstationscontroler BSC können zu einem Basisstationssystem BSS zusammengefaßt werden.

Das Basisstationssystem BSS ist dabei auch für die Funkkanalverwaltung bzw. -zuteilung, die Datenratenanpaßung, die Überwachung der Funkübertragungsstrecke, Hand-Over-Prozeduren und die Zuteilung bzw. Signalisierung der zu verwendenden Spreizcodes zuständig und übermittelt die dazu nötigen Signalisierungsinformationen zu den Mobilstationen MS.

Bei der Realisierung von Mobilfunksystemen entsteht oft die Situation, daß geographische Gebiete durch mehrere Mobilfunksysteme unterschiedlicher Netzbetreiber gleichzeitig abgedeckt sind. Den unterschiedlichen Netzbetreibern werden dabei allerdings von Regulierungsbehörden in der Regel unterschiedliche Frequenzkanäle zugeteilt, die sie zur Informationsübertragung Verbindungen bzw. Teilnehmern zuordnen dürfen.

Durch eine nicht optimale Kooperation der unterschiedlichen Netzbetreiber werden die Mobilfunksysteme unterschiedlicher Netzbetreiber jedoch oft nicht optimal geplant, so daß insbesondere in benachbarten Frequenzbereichen unterschiedlicher Netzbetreiber oft Interferenzprobleme auftreten. Erhöhte Interferenzen treten auch innerhalb des Mobilfunksystems eines Netzbetreibers auf, wenn in unterschiedlichen Frequenzkanälen Zellen mit unterschiedlicher Größe verwendet werden (unterschiedliche "Layer"). Diese Zellaufteilung nennt man hierarchical cell systems.

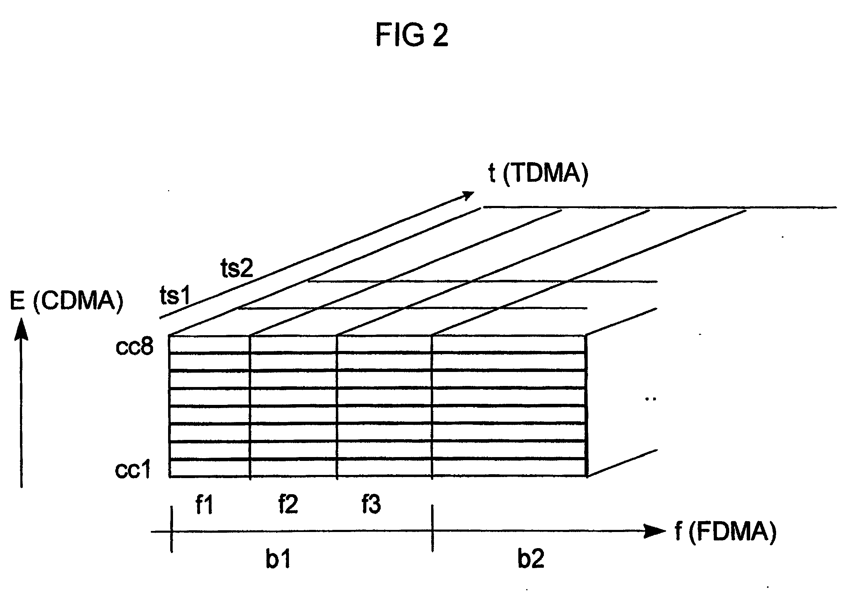

Figur 2 zeigt die Rahmenstruktur eines möglichen Vielfachzugriffsverfahrens, mittels dessen Informationen, die über eine Funkschnittstelle übertragen werden, separiert werden können und einer bestimmten Verbindung bzw. dem entsprechenden Teilnehmer zugeteilt werden können. Dazu kann ein Zeitvielfachzugriff TDMA, ein Frequenzvielfachzugriff FDMA, ein Codevielfachzugriff CDMA oder eine Kombination aus mehreren dieser Vielfachzugriffsverfahren eingesetzt werden.

Beim FDMA wird das Frequenzband b in mehrere Frequenzkanäle f zerlegt; diese Frequenzkanäle werden durch den Zeitvielfachzugriff TDMA in Zeitschlitze ts aufgeteilt. Die innerhalb eines Zeitschlitzes ts und eines Frequenzkanals f übertragenen Signale können durch verbindungsindividuelle den Informationen aufmodulierte Spreizcodes, sogenannte CDMA-Codes cc separiert werden. Die so entstehenden physikalischen Kanäle werden nach einem festgelegten Schema logischen Kanälen zugeordnet. Bei den logischen Kanälen unterscheidet man grundsätzlich zwei Arten:

Signalisierungskanäle zur Übertragung von Signalisierungsinformationen und Verkehrskanäle zur Übertragung von Nutzinformationen.

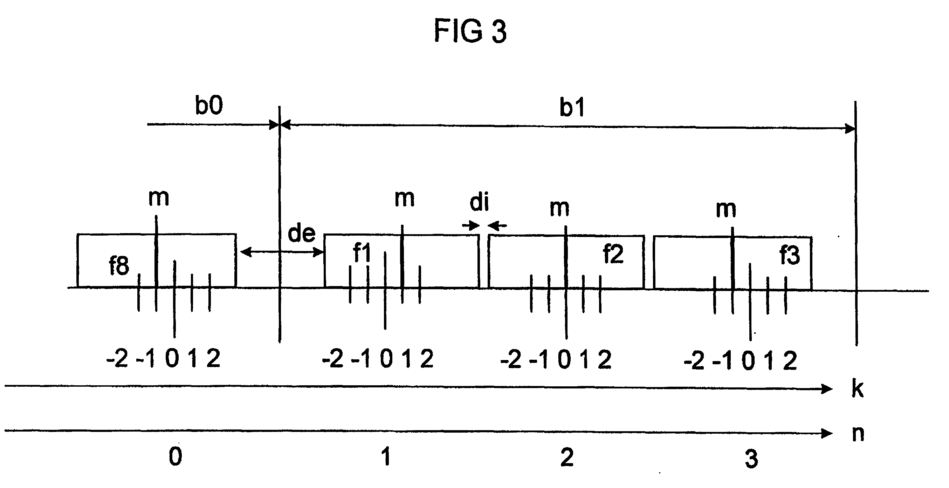

Figur 3 zeigt ein erstes grobes und ein zweites feines Rasterschema, gemäß dem die Frequenzkanäle f innerhalb von Frequenzbändern b angeordnet sind. Dabei ist beispielsweise das Frequenzband b1 einem Netzbetreiber zugeordnet und das Frequenzband b0 einem anderen Netzbetreiber zugeordnet. Es ist auch möglich daß beide Frequenzbänder einem Netzbetreiber zugeordnet sind. Innerhalb der unterschiedlichen Frequenzbänder b sind mehrere Frequenzkanäle f angeordnet.

Die Frequenzkanäle f1, f2, f3 innerhalb eines Frequenzbandes b1 können dabei dichter gepackt sein, d.h. der interne Frequenzabstand di innerhalb eines Frequenzbandes b1 zwischen den Frequenzkanälen f1 und f2 bzw. f2 und f3 ist kleiner (kleinere Guardbänder zwischen Frequenzkanälen wie beispielsweise f1 und f2) als der externe Frequenzabstand de zwischen Frequenzkanälen f1 und f8 unterschiedlicher Netzbetreiber (größere Guardbänder zwischen Frequenzkanälen wie beispielsweise f1 und f8) und damit auch unterschiedlicher Frequenzbänder b, die in der Regel unterschiedlichen Netzbetreibern zugeteilt werden. Dadurch wird erreicht, daß Interferenzprobleme, die gerade zwischen benachbarten Frequenzkanälen f8 und f1 unterschiedlicher Netzbetreiber auftreten, reduziert werden.

Erhöhte Interferenzen treten auch innerhalb des Mobilfunksystems eines Netzbetreibers auf, wenn in hierarchisch gegliederten sich überlagernden Funkzellen unterschiedlicher Größe benachbarte Frequenzkanäle f verwendet werden. Zwischen den Frequenzkanälen f unterschiedlicher Layer der hierarchischen Gliederung kann es daher ebenfalls vorteilhaft sein, einen größeren Frequenzabstand, also ein größeres Guardband einzufügen, als zwischen Frequenzkanälen f des gleichen Layers.

Die Anordnung der Frequenzkanäle f innerhalb der Rasterschemen kann je nach physikalischen Rahmenbedingungen und Netztopologie flexibel und angepaßt an diese physikalischen Rahmenbedingungen so erfolgen, daß Interferenzen insbesondere zwischen Frequenzkanälen f unterschiedlicher Betreiber im Wesentlichen vermieden werden.

Es ist auch möglich, daß die Anordnung der Frequenzkanäle f gemäß weiterer noch feinerer bzw. gröberer Rasterschemen erfolgt.

Ferner können Frequenzkanäle f1, f2, f3 bzw. deren Mittenfrequenzen m (Trägerfrequenz) innerhalb eines Frequenzbandes b bzw. innerhalb eines Layers auch so dicht gepackt werden, daß sie überlappen. Auch dies kann trotz der Interferenzzunahme innerhalb eines Frequenzbandes bzw. innerhalb eines Layers aufgrund der Interferenzreduzierung zwischen unterschiedlichen Frequenzbändern b bzw. unterschiedlichen Layern zu einer Gesamtinterferenzreduzierung führen.

Der Frequenzbereich, in dem das feine Rasterschema definiert ist,-in dem also das feine Rasterschema einen Frequenzbereich abdeckt, kann eingeschränkt sein. Der durch den Defintionsbereich des groben Rasterschemas eingeschränkte Definitionsbereich des feinen Rasterschemas ist also innerhalb des Definitionsbereichs des groben Rasterschemas noch weiter eingeschränkt, beispielsweise durch die Einschränkung auf nur bestimmte Intervalle innerhalb des Definitionsbereichs des groben Rasterschemas. Es sind also nur Teile des Frequenzbereichs, der durch das grobe Rasterschema abgedeckt ist auch durch das feine Rasterschema abgedeckt, und somit als Mittenfreuenz m definiert.

Die Skalierung des groben Rasterschemas erfolgt durch ganzzahlige Zahlen n, wobei auch der Definitionsbereich für n entsprechend des begrenzten zur Verfügung stehenden Frequenzbandes eingeschränkt sein kann. Die Skalierung des feinen Rasterschemas erfolgt durch ganzzahlige Zahlen k, wobei jeweils an den Skalierungspunkten des groben Rasterschemas n ein Nullpunkt für das feine Rasterschema liegt. Der Definitionsbereich für k kann eingeschränkt sein, so daß das feine Rasterschema nur in bestimmten Intervallen, des gesamten Frequenzbereiches definiert ist.

Ein Frequenzkanal für zukünftige CDMA-Mobilfunksysteme, wie ein Wide-Band-CDMA-System oder ein TD-CDMA-System, das im FDD (Frequency Division Duplex)- oder TDD (Time Division Duplex)-Modus betrieben wird, hat entsprechend einer Spreizung der digitalen Signale mit einer Chiprate von ca. 4 Megachips pro Sekunde eine Bandbreite von ca. 4MHz.

Aufgrund des langsam abfallenden Modulationsspektrums ist zur Nachbarkanalunterdrückung ein Frequenzabstand d (Guardband) zwischen den unterschiedlichen Frequenzkanälen f nötig. Dieser kann flexibel an die jeweiligen physikalischen Rahmenbedingungen angepaßt werden. Dem groben Rasterschema wird daher beispielsweise eine Skalierung von 5MHz zugewiesen. Dem feinen Rasterschema wird eine Skalierung beispielsweise von 200kHz zugewiesen.

Basierend auf diesen Rasterschemen sind nur Frequenzkanäle f definiert, deren Mittenfrequenz m auf einem Skalenpunkt des feinen Rasterschemas liegt, wobei das feine Rasterschema derart eingeschränkt ist, daß es nur in bestimmten Intervallen um die Skalenpunkte des groben Rasterschemas definiert ist.

Im folgenden wird ein auf dem oben beschriebenen Rasterschema basierendes Verfahren zur eingeschränkten Frequenzkanalsuche oder Kanalsuche (Scannen) beschrieben, das durch die Einschränkung des Definitionsbereiches des feinen Rasterschemas energiesparend durchgeführt werden kann.

Nach dem Einschalten einer Mobilstation MS, insbesondere im Ausland, oder in anderen Situationen, in denen die Mobilstation MS versucht, sich in ein Mobilfunksystem neu einzubuchen, wird der Synthesizer SYN des Hochfrequenzteils HF der Mobilstation auf alle grundsätzlich möglichen Mittenfrequenzen m eingestellt. Es wird gegebenenfalls gemessen, ob in diesem Frequenzkanal Funksignale mit einer bestimmten Mindestleistung empfangen werden; werden Funksignale mit einer bestimmten Mindestleistung empfangen, so werden sie nach einer charakteristischen bekannten Synchronisationsfolge abgesucht. Wird in diesem Frequenzkanal diese charakteristische Synchronisationsfolge gesendet, so synchronisiert sich die Mobilstation MS mit dem die Synchronisationsfolge sendenden Mobilfunksystem, verarbeitet die über einen Signalisierungskanal ausgesendeten Systeminformationen und bucht sich im Falle eines Mobilfunksystems, für das die Mobilstation MS zugelassen ist, in das Mobilfunksystem ein. Andernfalls wird der Synthesizer auf den nächsten Frequenzkanal eingestellt.

Für die Fälle, daß auf einem Frequenzkanal f keine Funksignale mit einer bestimmten Mindestleistung gesendet werden oder die charakteristische Synchronisationsfolge nicht übertragen wird, wird ebenfalls auf den nächsten Frequenzkanal übergegangen.

Bei herkömmlichen Verfahren zur Kanalsuche werden dabei alle grundsätzlich möglichen Mittenfrequenzen m, beispielsweise in 200kHz-Schritten durchsucht. Dadurch ist die Kanalsuche insbesondere im Ausland, wo keine Vorabinformationen über die Mittenfrequenzen bekannt sind, sehr aufwendig.

Dagegen sind bei einer Weiterbildung der Erfindung grundsätzlich nur Frequenzkanäle f mit einer Mittenfrequenz m von n * 5MHz + k * 200kHz zugelassen. Dabei ist n als Skalierung des groben Rasterschemas eine ganze Zahl beispielsweise zwischen 0 und 12, und k als Skalierung des feinen Rasterschemas, das die Abweichung vom groben Rasterschema beschreibt eine positive oder negative ganze Zahl, beispielsweise mit einem Betrag kleiner 4, so daß k * 200kHz deutlich kleiner als 5MHz ist:

$$m = f0 + n * 5MHz + k * 200kHz; \text{ mit } - kmax \leq k < + kmax; f0$$

$$\text{kleinste Mittenfrequenz}$$

Bestimmte Frequenzkanalanordnungen werden so grundsätzlich ausgeschlossen. Dadurch ergibt sich ein deutlich geringerer Aufwand und Energieverbrauch für die Frequenzkanalsuche:

nur 1/5 der möglichen Frequenzkanäle (Trägerfrequenzen) müssen abgesucht werden,
ausreichende Flexibilität zur Anordnung von Frequenzkanälen, um Intreferenzen zu vermeiden,
die Scandauer der Mobilstationen nach Trägerfrequenzen kann um 80% reduziert werden, was eine entsprechende Verlängerung der Standbyzeit zu Folge hat,
die Informationen zur Beschreibung eines bestimmten Frequenzkanals können effizient codiert und übertragen werden, was auch die Kompatibilität zukünftiger Systeme zu bereits vorhandenen Systemen, sog. Systemen der zweiten Generation, wie z.B. das GSM-System, erhöht, da weniger Informationen über die Signalisierungskanäle dieser Systeme zu übertragen sind.

Eine weitere Ausgestaltung zur effizienten Kanalsuche sieht vor, daß zuerst die Frequenzkanäle f mit der Mittenfrequenz m= n * 5MHz abgesucht werden, dann die Frequenzkanäle f mit der Mittenfrequenz m = n * 5MHz ± 1 * 200kHz, dann die Frequenzkanäle f mit der Mittenfrequenz m = n * 5MHz ± 2 * 200kHz, usw. bis m = n * 5MHz ± kmax * 200kHz.

Eine andere Ausgestaltung zur effizienten Kanalsuche sieht vor, daß zuerst die Frequenzkanäle f mit der Mittenfrequenz m= n * 5MHz abgesucht werden, dann die Frequenzkanäle f mit der Mittenfrequenz m = n * 5MHz ± kmax * 200kHz, dann die Frequenzkanäle f mit der Mittenfrequenz m = n * 5MHz ± (kmax - 1) * 200kHz, usw. bis zu Frequenzkanäle f mit der Mittenfrequenz m = n * 5MHz ± 1 * 200kHz.

Die Einschränkung des Definitionsbereiches von k kann auch einen anderen definierten Satz diskreter Werte annehmen, wie beispielsweise: k: -12, -7, -3, -1, 0, 1, 3, 7. Dabei kann der Satz diskreter Werte für k auch für jedes n verschieden sein.

Es werden also Frequenzkanäle, die mit einer größeren Wahrscheinlichkeit benutzt werden, von der Mobilstation MS priorisiert abgesucht. Informationen über eine Priorisierung von bestimmten Frequenzkanälen können in der Mobilstation MS abgespeichert sein oder von Zeit zu Zeit durch den Netzbetreiber über das Mobilfunksystem an die Mobilstation MS übertragen werden.

Die Mittenfrequenz (Trägermittenfrequenz, carrier center frequency kann also gemäß folgender Beziehung bestimmt werden:

$$m = f0 + n * fs + k* 200kHz; \text{ mit}$$

f0 kleinste Mittenfrequenz , wobei in einem Ausführungsbeispiel der Erfindung gilt:
n = UARFCN div Nc
k = (UARFCN mod Nc) - (Nc div 2)
Nc = Anzahl möglicher Trägerpositionen um einen Träger im groben Rasterschema

UARFCN = Nummer des genutzten Frequenzkanals.

Die erste Mittenfrequenz f0, fs (beispielsweise = 5MHZ) und die Anzahl der Träger im feineren Rasterschema Nc hängen dabei von der benützten Chiprate und vom Frequenzband ab.

Eine derartige Trägeranordnung erlaubt eine effiziente Codierung und eine effiziente erste Synchronisation. Es liegt auch im Rahmen der Erfindung, m nicht als Mittenfrequenz, sondern beispielsweise als Randfrequenz eines Funkkanals aufzufassen, oder auf eine andere Form zur Beschreibung eines Funkkanals zu verwenden.

Eine Ausführungsvariante der Erfindung sieht vor, die Menge der im Rahmen der Erfindung befindlichen Frequenzkanäle zu ändern, indem Frequenzkanäle der Menge hinzugefügt werden oder daraus entfernt werden. Dies kann auch durch eine Priorisierung der in der Menge enthaltenen Frequenzkanäle erfolgen. Eine derartige Änderung der Menge der abzusuchenden Frequenzkanäle kann durch entsprechende Daten, die vom Teilnehmeridentifizierungsmodul oder über die Luftschnittstelle an die Steuereinrichtung der Funkstation übermittelt werden, realisiert werden.

Ferner kann eine Beschreibung von Frequenzkanälen auf dem oben beschriebenen Rasterschema basierend effizient erfolgen.

Zur Verwaltung bzw. zum Betreiben eines Mobilfunksystems werden insbesondere zwischen Basisstation BS und Mobilstation MS in einer Vielzahl von Situationen Signalisierungsinformationen übertragen, die auch Informationen über einen Frequenzkanal f enthalten, wie beispielsweise zur Durchführung eines Interfrequency-Handovers oder zur Übertragung einer Nachbarkanalliste usw.

Durch die Beschreibung bzw. Codierung eines Frequenzkanals f mittels der oben beschriebenen Rasterschemen bzw. den entsprechenden Skalierungen, können beispielsweise zur Übertragung der Information "Frequenzkanal mit einer Mittenfrequenz von 10,6MHz" die variablen Informationen n = 2, k = 3 (erste variable Information) übertragen werden, und diese in der empfangenden Funkstation zusammen mit den dort abgespeicherten konstanten Informationen 5MHz, 200kHz (zweite konstante Information) zur Bestimmung der Mittenfrequenz m folgendermaßen verwendet werden:

$$m = 2 * 5MHz + 3 * 200kHz = 10,6MHz$$

Gegebenenfalls kann dazu noch ein konstanter abgespeicherter Wert f0 hinzuaddiert werden:

$$m = f0 + 2 * 5MHz + 3 * 200kHz = f0 + 10,6MHz$$

So können Informationen über zu verwendende oder verwendete Frequenzkanäle f bzw. deren Mittenfrequenz m mit weniger Aufwand und einer geringen Bitzahl von einer Mobilstation MS zu einer Basisstation BS oder umgekehrt übermittelt werden.

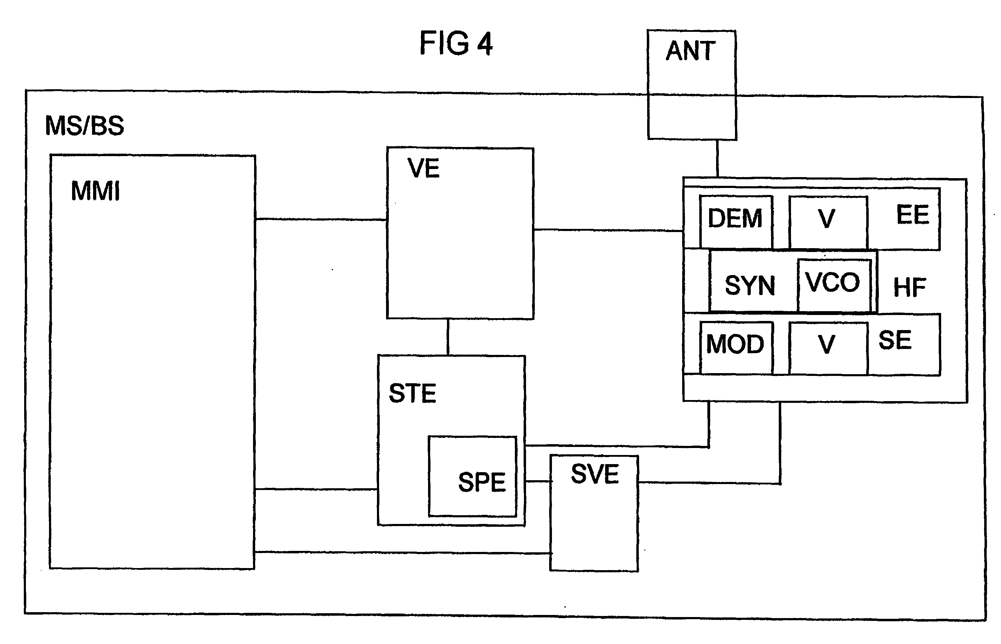

Figur 4 zeigt eine Funkstation, die eine Basisstation BS oder eine Mobilstation MS sein kann, bestehend aus: einer Steuereinrichtung STE, einer Verarbeitungseinrichtung VE, einer Stromversorgungseinrichtung SVE und einem Hochfrequenzteil HF, bestehend aus einer Empfangseinrichtung EE, einer Sendeeinrichtung SE und einem Frequenzsynthesizer SYN und einer Antenneneinrichtung ANT. Die einzelnen Elemente der Funkstation sind auch durch Leiterbahnen oder Bussysteme miteinander verbunden. Die Mobilstation enthält darüber hinaus eine Bedieneinheit mit Lautsprecherelement und Mikrophonelement.

Die Steuereinrichtung STE besteht im wesentlichen aus einem programmgesteuerten Mikrocontroler und die Verarbeitungseinrichtung VE aus einem digitalen Signalprozessor DSP, wobei beide schreibend und lesend auf Speicherbausteine SPE zugreifen können.

Der Mikrocontroler steuert und kontrolliert alle wesentlichen Elemente und Funktionen der Funkstation MS/BS und den Kommunikations- und Signalisierungsablauf.

In den flüchtigen oder nicht-flüchtigen Speicherbausteinen SPE sind die Programmdaten, die zur Steuerung der Funkstation und des Kommunikationsablaufs, insbesondere auch der Signalisierungsprozeduren benötigt werden, Geräteinformationen, während der Verarbeitung von Signalen entstehende Informationen und konstante Informationen über das Rasterschema der Frequenzkanäle und dessen Einschränkung des Definitionsbereiches gespeichert.

Der Hochfrequenzteil HF besteht aus einer Sendeeinrichtung SE, mit einem Modulator und einem Verstärker V und einer Empfangseinrichtung EE mit einem Demodulator und ebenfalls einem Verstärker V. Der Sendeeinrichtung SE und der Empfangseinrichtung EE wird über den Synthesizer SYN eine Frequenz eines spannungsgeregelten Oszillators VCO zugeführt. Zur Frequenzkanalsuche und zur Informationsübertragung wird der Synthesizer SYN und die entsprechenden Empfangsfilter durch die Steuereinrichtung STE mittels Steuersignale auf die gewünschte Mittenfrequenz m (Trägerfrequenz) eingestellt. Dies kann gemäß oben beschriebener Verfahren erfolgen.

Bei einer CDMA-Übertragung bzw. bei CDMA-Funkstationen werden die zu übertragenden Informationen in der Verarbeitungseinrichtung VE vor der Modulation durch einen verbindungsindividuellen CDMA-Code (Spreizcode) gespreizt und nach der Übertragung entspreizt. Auch die Untersuchung der empfangenen Funksignale bezüglich der charakteristischen, gegebenenfalls in den Speicherbausteinen SPE gespeicherten Synchronisationsfolge erfolgt mittels der Verarbeitungseinrichtung VE.

**Patentansprüche**

1. Verfahren zur Informationsübertragung zwischen einer Basisstation (BS) und einer Mobilstation (MS), bei dem

   a) zur Übertragung der Informationen zumindest einem Netzbetreiber zumindest ein Frequenzband (b1) zur Verfügung steht, das mehrere Frequenzkanäle (f) enthält,
   b) die Übertragung von Informationen zumindest zeitweise mittels Funksignale im wesentlichen innerhalb eines Frequenzkanals (f1) erfolgt,
   c) die Anordnung der Trägermittenfrequenzen der Frequenzkanäle (f) innerhalb des Frequenzbandes (b1) gemäß einem ersten groben Rasterschema, dessen Rasterung im wesentlichen der Breite eines Frequenzkanals entspricht, erfolgt
   d) die Frequenzkanäle gemäß einem zweiten feinen Rasterschema gegenüber dem ersten groben Rasterschema verschiebbar sind, und
   e) zumindest der Definitionsbereich des feinen Rasterschemas eingeschränkt ist.

2. Verfahren nach Anspruch 1, bei dem die Mobilstation (MS) entsprechend der Informationen über die Einschränkung des Definitionsbereichs des feinen Rasterschemas nur eine eingeschränkte Frequenzkanalsuche durchführt.

3. Verfahren nach Anspruch 2, bei dem bei der Durchführung der eingeschränkten Frequenzkanalsuche bestimmte Werte des eingeschränkten Definitionsbereichs des feinen Rasterschemas bevorzugt abgesucht werden.

4. Verfahren nach einem der vorhergehenden Ansprüche, bei dem

   a) das grobe und das feine Rasterschema jeweils durch variable Informationen (k,n) und konstante Informationen beschrieben werden,
   b) ein Frequenzkanal (f) durch variable Informationen (k,n) und konstante Informationen eindeutig beschreibbar ist,
   c) die konstanten Informationen in der Mobilstation (MS) abgespeichert sind, und
   d) die variablen Informationen (k, n) zur Mobilstation (MS) übertragen werden.

5. Verfahren nach einem der vorhergehenden Ansprüche, bei dem

   a) das grobe und das feine Rasterschema jeweils durch variable Informationen und konstante Informationen beschrieben werden,
   b) ein Frequenzkanal (f) durch variable Informationen (k,n) und konstante Informationen eindeutig beschreibbar ist,
   c) die konstanten Informationen in der Basisstation (BS) abgespeichert sind, und
   d) die variablen Informationen (k,n) zur Basisstation (BS) übertragen werden.

6. Verfahren nach einem der vorhergehenden Ansprüche, bei dem

   a) die Übertragung der Informationen gemäß einem CDMA-Verfahren durchgeführt wird, wobei die mittels eines CDMA-Codes gespreizten Funksignale im wesentlichen innerhalb eines Frequenzkanals (f1) übertragen werden, und
   b) die Anordnung der Frequenzkanäle (f) derart erfolgt, daß durch die zwischen den Frequenzkanälen (f) liegenden Frequenzabstände (de,di) Interferenzen zwischen den Funksignalen der Frequenzkanäle (f) reduziert werden.

7. Verfahren zur Informationsübertragung zwischen einer Basisstation (BS) und einer Mobilstation (MS), bei dem die Übertragung von Informationen zumindest zeitweise mittels Funksignale im wesentlichen innerhalb eines Frequenzkanals (f1) erfolgt,
   wobei die Trägermittenfrequenz m eines Frequenzkanals innerhalb eines Frequenzbandes (b1) gemäss einem groben Rasterschema, dessen Rasterung im Wesentlichen der Breite eines Frequenzkanals entspricht, angeordnet ist, und der Frequenzkanal gemäss einem feinen Rasterschema gegenüber dem groben Rasterschema verschiebbar ist, und
die Trägermittenfrequenz m gemäss folgender Beziehung beschreibbar ist:

$$m = f0 + n * fs + k * 200kHz; \text{ mit}$$

f0 kleinste Mittenfrequenz des groben Rasters,

fs Trägerabstand des groben Rasters,

n = UARFCN div Nc,

k = (UARFCN mod Nc) - (Nc div 2),

Nc = Anzahl möglicher Trägerpositionen um einen Träger im groben Rasterschema inklusive der Trägerposition auf dem Träger des groben Rasterschemas,

UARFCN = Nummer des Frequenzkanals.

8. Funkstation (MS/BS) mit

a) Mitteln zur Übertragung (STE,HF,VE,ANT) von Informationen in einem Frequenzband (b1), das mehrere Frequenzkanäle (f) enthält, wobei die Übertragung von Informationen zumindest zeitweise mittels Funksignale im wesentlichen innerhalb eines Frequenzkanals (f1) erfolgt, und die Anordnung der Trägermittenfrequenzen der Frequenzkanäle (f) innerhalb des Frequenzbandes (b1) gemäß einem ersten groben Rasterschema, dessen Rasterung im wesentlichen der Breite eines Frequenzkanals entspricht, derart erfolgt, daß die Anordnung der Frequenzkanäle gemäß einem zweiten feinen Rasterschema gegenüber dem ersten groben Rasterschema verschiebbar ist, und
b) Mitteln zur Speicherung (SPE) von Informationen über eine Einschränkung des Definitionsbereichs zumindest des feinen Rasterschemas.

9. Funkstation (MS/BS) nach Anspruch 8 mit Mitteln zur Durchführung (STE,HF,VE,ANT) einer entsprechend der Informationen über die Einschränkung des Definitionsbereichs des feinen Rasterschemas eingeschränkten Frequenzkanalsuche.

10. Funkstation (MS/BS) nach einem der Ansprüche 8 bis 9 mit Mitteln zur Speicherung (SPE) von konstanten Informationen zur Beschreibung des groben und des feinen Rasterschemas.

11. Funkstation (MS/BS) nach Anspruch 10 mit Mitteln zur Bestimmung (STE) eines Frequenzkanals aus den gespeicherten konstanten Informationen und übertragenen variablen Informationen.

12. Funkstation (MS/BS) nach einem der Ansprüche 8 bis 11 mit

a) Mitteln zur Übertragung (HF,STE,VE,ANT) von Informationen gemäß einem CDMA-Verfahren, wobei die mittels eines CDMA-Codes gespreizten Funksignale im wesentlichen innerhalb eines Frequenzkanals (f) übertragen werden,
b) Mitteln zur Anordnung (STE) des bzw. der zu verwendenden Frequenzkanals bzw. Frequenzkanäle (f) derart, daß durch die zwischen den Frequenzkanälen (f) liegenden Frequenzabstände (de,di) Interferenzen zwischen den Funksignalen der Frequenzkanäle (f) reduziert werden.

13. Funkstation (MS/BS) mit
Mitteln zur Übertragung (STE,HF, VE,ANT) von Informationen mittels Funksignalen, die zumindest zeitweise im wesentlichen innerhalb eines Frequenzkanals (f1) übertragen werden,
wobei die Trägermitten frequenz m eines Frequenzkanals innerhalb eines Frequenzbandes (b1) gemäss einem groben Rasterschema, dessen Rasterung im Wesentlichen der Breite eines Frequenzkanals entspricht, angeordnet ist, und der Frequenzkanal gemäss einem feinen Rasterschema gegenüber dem groben Rasterschema verschiebbar ist, und
die Trägermittenfrequenz m gemäss folgender Beziehung beschreibbar ist:

$$m = f0 + n * fs + k * 200kHz;\ mit$$

f0 kleinste Mittenfrequenz des groben Rasters,
fs Trägerabstand des groben Rasters,
n = UARFCN div Nc,
k = (UARFCN mod Nc) - (Nc div 2),
Nc = Anzahl möglicher Trägerpositionen um einen Träger im groben Rasterschema inklusive der Trägerposition auf dem Träger des groben Rasterschemas,
UARFCN = Nummer des Frequenzkanals.

## Claims

1. Method for transmitting information between a base station (BS) and a mobile station (MS), in which

   a) at least one frequency band (b1), which contains a number of frequency channels (f), is available to at least one network operator for transmitting the information,
   b) the information is transmitted by means of radio signals essentially within a frequency channel (f1) at least from time to time,
   c) the carrier centre frequencies of the frequency channels (f) are arranged within the frequency band (b1) according to a first coarse raster system, the raster pattern of which essentially corresponds to the width of one frequency channel,
   d) the frequency channels can be displaced with respect to the first coarse raster system in accordance with a second fine raster system, and
   e) at least the range of definition of the fine raster system is restricted.

2. Method according to Claim 1, in which the mobile station (MS) only performs a restricted frequency channel search in accordance with the information on the restriction of the range of definition of the fine raster system.

3. Method according to Claim 2, in which certain values of the restricted range of definition of the fine raster system are searched with preference during the performance of the restricted frequency channel search.

4. Method according to one of the preceding claims, in which

   a) the coarse raster system and the fine raster system are in each case described by variable information (k, n) and constant information,
   b) a frequency channel (f) can be described unambiguously by variable information (k, n) and constant information,
   c) the constant information is stored in the mobile station (MS), and
   d) the variable information (k, n) is transmitted to the mobile station (MS).

5. Method according to one of the preceding claims, in which

   a) the coarse raster system and the fine raster system are in each case described by variable information and constant information,
   b) a frequency channel (f) can be unambiguously described by variable information (k, n) and constant information,
   c) the constant information is stored in the base station (BS), and
   d) the variable information (k, n) is transmitted to the base station (BS).

6. Method according to one of the preceding claims, in which

   a) the information is transmitted in accordance with a CDMA method, the radio signals spread by means of a CDMA code being transmitted essentially within a frequency channel (f1), and

b) the frequency channels (f) are arranged in such a manner that, due to the frequency spacings (de, di) between the frequency channels (f), interference between the radio signals of the frequency channels (f) is reduced.

7. Method for transmitting information between a base station (BS) and a mobile station (MS), in which information is transmitted at least from time to time by means of radio signals essentially within a frequency channel (f1), where the carrier centre frequency m of a frequency channel is arranged in accordance with a coarse raster system, the raster pattern of which essentially corresponds to the width of one frequency channel, and in accordance with a fine raster system which can be displaced with respect to the coarse raster system, within a frequency band (b1), and can be described in accordance with the following relation:

$$m = f0 + n * fs + k * 200 \text{ kHz; where}$$

f0 lowest centre frequency of the coarse raster,
fs carrier spacing of the coarse raster,
n = UARFCN div Nc,
k = (UARFCN mod Nc) - (Nc div 2),
Nc = number of possible carrier positions around a carrier in the coarse raster system, including the carrier position on the carrier of the coarse raster system,
UARFCN = number of frequency channel.

8. Radio station (MS/BS) comprising

a) means for transmitting (STE, HF, VE, ANT) information in a frequency band (b1) which contains a number of frequency channels (f), information being transmitted by means of radio signals essentially within a frequency channel (f1) at least from time to time, and the carrier centre frequencies of the frequency channels (f) being arranged within the frequency band (b1) in accordance with a first coarse raster system, the raster pattern of which essentially corresponds to the width of one frequency channel, in such a manner that the arrangement of the frequency channels can be displaced with respect to the first coarse raster system in accordance with a second fine raster system, and
b) means for storing (SPE) information on a restriction of the range of definition of at least the fine raster system.

9. Radio station (MS/BS) according to Claim 8, comprising
means for performing (STE, HF, VE, ANT) a frequency channel search restricted in accordance with the information on the restriction of the range of definition of the fine raster system.

10. Radio station (MS/BS) according to one of Claims 8 and 9, comprising
means for storing (SPE) constant information for describing the coarse raster system and the fine raster system.

11. Radio station (MS/BS) according to Claim 10, comprising
means for determining (STE) a frequency channel from the stored constant information and transmitted variable information.

12. Radio station (MS/BS) according to one of Claims 8 to 11, comprising

a) means for transmitting (HF, STE, VE, ANT) information in accordance with a CDMA method, the radio signals spread by means of a CDMA code being transmitted essentially within a frequency channel (f),
b) means for arranging (STE) the frequency channel or frequency channels (f), respectively, to be used in such a manner that, due to the frequency spacings (de, di) between the frequency channels (f), interference between the radio signals of the frequency channels (f) is reduced.

13. Radio station (MS/BS) comprising
means for transmitting (STE, HF, VE, ANT) information by means of radio signals which are transmitted at least from time to time essentially within a frequency channel (f1), where
the carrier centre frequency m of a frequency channel is arranged in accordance with a coarse raster system, the raster pattern of which essentially corresponds to the width of one frequency channel, and in accordance with a fine raster system which can be displaced with respect to the coarse raster system, within a frequency band (b1), and can be described in accordance with the following relation:

$$m = f0 + n * fs + k * 200 \text{ kHz; where}$$

f0 lowest centre frequency of the coarse raster,
fs carrier spacing of the coarse raster,
n = UARFCN div Nc,
k = (UARFCN mod Nc) - (Nc div 2),
Nc = number of possible carrier positions around a carrier in the coarse raster system, including the carrier position on the carrier of the coarse raster system,
UARFCN = number of frequency channel.

**Revendications**

1. Procédé de transmission d'informations entre une station de base (BS) et une station mobile (MS), dans lequel

   a) au moins une bande de fréquences (b1) est disponible pour au moins un exploitant du réseau pour la transmission des informations, cette bande de fréquences contenant plusieurs canaux de fréquences (f),
   b) la transmission des informations est réalisée, au moins par intermittences, au moyen de signaux radio, substantiellement dans un canal de fréquences (f1),
   c) la disposition des fréquences centrales porteuses des canaux de fréquences (f) est réalisée dans la bande de fréquences (b1) suivant un premier schéma de trame grossier, dont le tramage correspondant substantiellement à la largeur d'un canal de fréquences,
   d) les canaux de fréquences sont déplaçables, suivant un deuxième schéma de trame fin, par rapport au premier schéma de trame grossier, et
   e) au moins le domaine de définition du schéma de trame fin est limité.

2. Procédé suivant la revendication 1, dans lequel la station mobile (MS) réalise seulement une exploration limitée de canaux de fréquences conformément aux informations sur la limitation du domaine de définition du schéma de trame fin.

3. Procédé suivant la revendication 2, dans lequel, lors de la réalisation de l'exploration limitée de canaux de fréquences, certaines valeurs du domaine de définition limité du schéma de trame fin sont explorées de préférence.

4. Procédé suivant l'une quelconque des revendications précédentes, dans lequel

   a) le schéma de trame grossier et le schéma de trame fin sont respectivement décrits par des informations variables (k, n) et des informations constantes,
   b) un canal de fréquences (f) peut être décrit de manière distincte par des informations variables (k, n) et des informations constantes,
   c) les informations constantes sont mémorisées dans la station mobile (MS), et
   d) les informations variables (k, n) sont transmises à la station mobile (MS).

5. Procédé suivant l'une quelconque des revendications précédentes, dans lequel

   a) le schéma de trame grossier et le schéma de trame fin sont respectivement décrits par des informations variables et des informations constantes,
   b) un canal de fréquences (f) peut être décrit de manière distincte par des informations variables (k, n) et des informations constantes,
   c) les informations constantes sont mémorisées dans la station de base (BS), et
   d) les informations variables (k, n) sont transmises à la station de base (BS).

6. Procédé suivant l'une quelconque des revendications précédentes, dans lequel

   a) la transmission des informations est réalisée suivant un procédé CDMA, les signaux radio étalés au moyen d'un code CDMA sont substantiellement transmis dans un canal de fréquences (f1), et

b) la disposition des canaux de fréquences (f) est réalisée de telle sorte que les interférences entre les signaux radio des canaux de fréquences (f) sont réduites en raison des écarts de fréquences (de, di) situés entre les canaux de fréquences (f).

7. Procédé pour la transmission d'informations entre une station de base (BS) et une station mobile (MS), dans lequel la transmission des informations est réalisée, au moins par intermittences, au moyen de signaux radio, substantiellement dans un canal de fréquences (f1), la fréquence centrale porteuse m d'un canal de fréquences étant disposée dans une bande de fréquences (b1) suivant un schéma de trame grossier, dont le tramage correspond substantiellement à la largeur d'un canal de fréquences, et le canal de fréquences étant déplaçable suivant un schéma de trame fin, par rapport au schéma de trame grossier, et la fréquence centrale porteuse m pouvant être décrite suivant la relation suivante :

$$m = f0 + n * fs + k * 200 \text{ kHz ; avec}$$

f0 étant la plus petite fréquence centrale de la trame grossière,
fs étant l'écart porteur de la trame grossière,
n = UARFCN div Nc,
k = (UARFCN mod Nc) - (Nc div 2)
Nc = nombre de positions porteuses possibles aux environs d'un porteur dans le schéma de trame grossier, y compris la position porteuse sur le porteur du schéma de trame grossier,
UARFCN = numéro du canal de fréquences.

8. Station radio (MS/BS) avec

a) des moyens de transmission (STE, HF, VE, ANT) d'informations dans une bande de fréquences (b1) contenant plusieurs canaux de fréquences (f), la transmission des informations étant réalisée, au moins par intermittences, au moyen de signaux radio, substantiellement dans un canal de fréquences (f1) et la disposition des fréquences centrales porteuses des canaux de fréquences (f) dans la bande de fréquences (b1) étant réalisée suivant un premier schéma de trame grossier, dont le tramage correspond substantiellement à la largeur d'un canal de fréquences, de telle manière que la disposition des canaux de fréquences est déplaçable, suivant un deuxième schéma de trame fin, par rapport au premier schéma de trame grossier, et
b) des moyens pour la mémorisation (SPE) d'informations sur une limitation du domaine de définition au moins du schéma de trame fin.

9. Station radio (MS/BS) suivant la revendication 8, avec des moyens pour la réalisation (STE, HF, VE, ANT) d'une exploration limitée de canaux de fréquences conformément aux informations sur la limitation du domaine de définition du schéma de trame fin.

10. Station radio (MS/BS) suivant l'une quelconque des revendications 8 à 9, avec des moyens pour la mémorisation (SPE) d'informations constantes pour la description du schéma de trame grossier et du schéma de trame fin.

11. Station radio (MS/BS) suivant la revendication 10, avec des moyens pour la détermination (STE) d'un canal de fréquences à partir des informations constantes mémorisées et des informations variables transmises.

12. Station radio (MS/BS) suivant l'une quelconque des revendications 8 à 11, avec

a) des moyens de transmission (HF, STE, VE, ANT) d'informations suivant un procédé CDMA, les signaux radio étalés au moyen d'un code CDMA étant substantiellement transmis dans un canal de fréquences (f),
b) des moyens pour la disposition (STE) du canal de fréquence resp. des canaux de fréquences (f) à utiliser, de telle manière que des interférences entre les signaux radio des canaux de fréquences (f) sont réduites en raison des écarts de fréquences (de, di) situés entre les canaux de fréquences (f).

13. Station radio (MS/BS) avec des moyens de transmission (STE, HF, VE, ANT) d'informations au moyen de signaux radio qui sont transmis, au moins par intermittences, substantiellement dans un canal de fréquences (f1),

la fréquence centrale porteuse m d'un canal de fréquences étant disposée dans une bande de fréquences (b1) suivant un schéma de trame grossier, dont le tramage correspond substantiellement à la largeur d'un canal de fréquences, et le canal de fréquences étant déplaçable, par rapport au schéma de trame grossier, suivant un schéma de trame fin, et

la fréquence centrale porteuse m pouvant être décrite suivant la relation suivante :

$$m = f0 + n * fs + k * 200 \text{ kHz ; avec}$$

f0 étant la plus petite fréquence centrale de la trame grossière,
fs étant l'écart porteur de la trame grossière,
n = UARFCN div Nc,
k = (UARFCN mod Nc) - (Nc div 2)
Nc = nombre de positions porteuses possibles aux environs d'un porteur dans le schéma de trame grossier, y compris la position porteuse sur le porteur du schéma de trame grossier,
UARFCN = numéro du canal de fréquences.

# FIG 1

EP 1 097 529 B1

FIG 2

FIG 3

EP 1 097 529 B1

# FIG 4

EP 1 097 529 B1